# EUROPÄISCHE PATENTSCHRIFT

(11) **EP 2 505 742 B1**
(45) Veröffentlichungstag und Bekanntmachung des Hinweises auf die Patenterteilung: **23.11.2016**
(21) Anmeldenummer: 12162232.8
(22) Anmeldetag: 29.03.2012
(51) Int. Cl.: E04H 5/12, F28C 1/02, F28F 25/00, F28F 25/10

(54) **Kühlturm**
Cooling tower
Tour de refroidissement

(30) Priorität: 29.03.2011 DE 202011004539 U
(43) Veröffentlichungstag der Anmeldung: 03.10.2012
(73) Patentinhaber: CTS Cooling Tower Solutions GmbH, 40627 Düsseldorf (DE)
(72) Erfinder: Streng, Dr. Andreas, 40627 Düsseldorf (DE)
(74) Vertreter: Stenger Watzke Ring

(56) Entgegenhaltungen:
- EP-B1- 0 413 409
- FR-A1- 2 216 540
- US-A- 4 976 895

## Beschreibung

Die Erfindung betrifft einen Kühlturm mit einer Fluidkühleinrichtung und einem Axialventilator, wobei der Axialventilator in Höhenrichtung des Kühlturms oberhalb der Fluidkühleinrichtung angeordnet und von einer im Fundament des Kühlturms verankerten Säule getragen ist, wobei der Axialventilator eine als eine Baueinheit ausgebildete Motor-Getriebe-Anordnung und ein Ventilatorrad aufweist, wobei das Ventilatorrad in Höhenrichtung des Kühlturms oberhalb der Motor-Getriebe-Anordnung angeordnet ist.

Kühltürme sind aus dem Stand der Technik an sich bekannt, so zum Beispiel aus der WO 2009/149954 A1. Sie dienen der Abkühlung eines Fluides, beispielsweise einer Flüssigkeit, wobei die Abkühlung nach dem Prinzip der Verdünstungskühlung erfolgt. Bei dem abzukühlenden Fluid kann es sich um Wasser handeln. Es sind aber auch sogenannte Säurekühltürme gebräuchlich, welche der Abkühlung von Säure dienen.

Kühltürme der vorgenannten Art dienen insbesondere dazu, Flüssigkeiten, vorzugsweise Wasser mittels Umgebungsluft abzukühlen. Zu diesem Zweck verfügen vorbekannte Kühltürme über eine Fluidkühleinrichtung, die ihrerseits Kühleinbauten und eine Flüssigkeitsverteil-einrichtung aufweist. Die zu kühlende Flüssigkeit wird oberhalb der Kühleinbauten mittels der Flüssigkeitsverteileinrichtung versprüht und rieselt an den Kühleinbauten entlang, und zwar der Schwerkraft folgend nach unten. Dabei werden die Kühleinbauten vorzugsweise im Gegenstrom zur abzukühlenden Flüssigkeit von Luft zum Zwecke der Kühlung durchströmt. Infolge des Kontakts der abzukühlenden Flüssigkeit mit der Luft innerhalb der Kühleinbauten kommt es zur bestimmungsgemäßen Abkühlung der abzukühlenden Flüssigkeit.

Um die als Kühlluft dienende Umgebungsluft in vorerläuterter Weise durch den Kühlturm zu führen, ist ein Axialventilator vorgesehen. Dieser ist in Höhenrichtung des Kühlturms oberhalb der Fluidkühleinrichtung angeordnet. Im Betriebsfall saugt der Axialventilator von unterhalb der Fluidkühleinrichtung Umgebungsluft an, die als Kühlluft die in Höhenrichtung des Kühlturms unterhalb des Axialventilators angeordnete Fluidkühleinrichtung durchströmt. Die vom Axialventilator angesaugte Umgebungsluft wird nach einem Durchströmen der Kühleinbauten nach oben als erwärmte Umgebungsluft an die Atmosphäre abgegeben.

Aus dem Stand der Technik nach der WO 2009/149954 A1 ist ein Axialventilator bekannt geworden, der eine als eine Baueinheit ausgebildete Motor-Getriebe-Anordnung sowie ein Ventilatorrad aufweist. Dabei stützt sich die Motor-Getriebe-Anordnung gegenüber der Kühlturmummantelung ab. Das Ventilatorrad ist hängend an der Motor-Getriebe-Anordnung angeordnet.

Aus dem Stand der Technik sind auch andere Bauformen bekannt geworden, so zum Beispiel aus der EP 0 413 409 B1. Gemäß der hier beschriebenen Konstruktion kommt ein Axialventilator zum Einsatz, der im Unterschied zur vorerläuterten WO 2009/149954 A1 über einen Axialventilator mit einem Ventilatorrad verfügt, das in Höhenrichtung des Kühlturms oberhalb der Motor-Getriebe-Anordnung des Axialventilators angeordnet ist. Die hier beschriebene Motor-Getriebe-Anordnung ist allerdings nicht als eine Baueinheit ausgebildet. Der Motor ist vielmehr vom Getriebe separiert und wird nicht von einer zentral ausgebildeten Säule, sondern von einem Querbalken getragen, der sich einendseitig an der Säule und anderendseitig an einer Gehäusekonstruktion abstützt. Zur kraftübertragenden Verbindung zwischen Motor und Getriebe ist eine in Richtung des Querbalkens verlaufende Verbindungswelle vorgesehen. Von Nachteil dieser Konstruktion ist insbesondere ihre Montage- bzw. Demontageunfreundlichkeit. Darüber hinaus ist sie in nachteiliger Weise entsprechend auszulegen und zu dimensionieren, damit die im Betriebsfall auftretenden Kräfte funktionssicher aufgenommen und unter anderem in die Gehäusekonstruktion abgeleitet werden können.

Aus der EP 0 558 300 B1 ist eine im Vergleich zur vorgenannten EP 0 413 409 B1 vergleichbare Lösung bekannt geworden. Auch hier wird eine Konstruktion mit einem Axialventilator vorgeschlagen, der über ein Ventilatorrad verfügt, das in Höhenrichtung des Kühlturms oberhalb der Motor-Getriebe-Anordnung des Axialventilators angeordnet ist. Die Motor-Getriebe-Anordnung ist indes nicht als eine Baueinheit ausgebildet und verfügt über einen separat zum Getriebe ausgebildeten Motor, der über eine Verbindungswelle mit dem Getriebe gekoppelt ist. Dabei ist der Motor von einer Querstütze getragen, die sich einendseitig an einer zentralen Säule und anderendseitig an einer Gehäusesäule abstützt. Dabei ist der Motor in Verlängerung der Gehäusesäule direkt oberhalb derselben an der Querstütze angeordnet, was in nachteiliger Weise eine verhältnismäßig lange Verbindungswelle zwischen Motor einerseits und Getriebe andererseits erforderlich macht. Insgesamt ist diese Konstruktion sehr aufwendig, nicht reparaturfreundlich und störanfällig aufgrund von von außen einwirkenden Beanspruchungen, da insbesondere der Motor und Teile der Verbindungswelle zwischen Motor und Getriebe vor äußeren Einflüssen völlig ungeschützt außerhalb der Kühlturmgehäusekonstruktion ausgebildet sind.

Aus der US 4,976,985 ist eine weitere Konstruktionsalternative bekannt geworden. Gemäß der hier vorgeschlagenen Konstruktion kommt eine zentrale Säule zum Einsatz, die oberseitig eine Flanschplatte trägt. Auf dieser Flanschplatte ist ein aus einem Motor und einem Ventilatorrad gebildeter Axialventilator direkt angeordnet. Die direkte Anordnung des Axialventilators an der Flanschplatte der Säule ist insbesondere aus Belastungsgründen von Nachteil, da die während eines bestimmungsgemäßen Betriebes des Axialventilators auftretenden dynamischen Belastungen direkt in die Säule eingeleitet werden, was eine entsprechende Dimensionierung derselben erforderlich macht.

Eine weitere Offenbarung ergibt sich aus der EP 0 168 525 B1. Gemäß der hier beschriebenen Konstruktion kommt eine nicht als eine Baueinheit ausgebildete Motor-Getriebe-Anordnung zum Einsatz, was die schon anhand der vorzierten Druckschriften erläuterten Nachteile mit sich bringt.

Ausgehend vom Vorbeschriebenen ist es die **Aufgabe** der Erfindung, einen Kühlturm der eingangs genannten Art dahingehend weiterzuentwickeln, dass hinsichtlich der Ausgestaltung des Axialventilators ein vereinfachter Aufbau sowie eine vereinfachte Handhabung ermöglicht ist.

Zur **Lösung** dieser Aufgabe wird mit der Erfindung ein Kühlturm der eingangs genannten Art vorgeschlagen, der sich dadurch auszeichnet, dass zur Anordnung der Motor-Getriebe-Anordnung an der Säule ein Verbindungsflansch in Form einer Platte vorgesehen ist, der beabstandet zu einer die Säule oberseitig abschließenden Flanschplatte angeordnet ist, wobei die Motor-Getriebe-Anordnung hängend am Verbindungsflansch angeordnet ist.

Im Unterschied zum vorbekannten Stand der Technik nach der WO 2009/149954 A1 stützt sich der Axialventilator nicht gegenüber der Kühlturmummantelung ab. Es ist vielmehr eine Säule vorgesehen, die den Axialventilator trägt und die im Fundament des Kühlturms verankert ist.

Die erfindungsgemäße Ausgestaltung ist insbesondere aus Lastabtragsgründen von Vorteil. Es ist keine Seltenheit, dass allein die Motor-Getriebe-Anordnung eines Axialventilators über eine Tonne wiegt. Hinzu kommt das Gewicht des Ventilatorrades. Neben dem durch das Gewicht des Axialventilators hervorgerufenen statischen Belastungen ergeben sich im bestimmungsgemäßen Betriebsfall dynamische Belastungen, die von der für den Axialventilator vorgesehenen Tragkonstruktion ebenfalls aufgenommen werden müssen. Gemäß der nach dem Stand der Technik gemäß der WO 2009/149954 A1 vorgesehenen Anordnung erfolgt die Abstützung eines Axialventilators über den Kühlturmmantel. Um insbesondere die im Betriebsfall auftretenden dynamischen Belastungen aufnehmen zu können, ist der Kühlturmmantel entsprechend zu dimensionieren, insbesondere zu verstärken.

Die erfindungsgemäße Ausgestaltung geht einen anderen Weg. Für die Abstützung des Axialventilators ist eine Säule vorgesehen. Diese ist im Fundament des Kühlturms verankert und trägt oberseitig den Axialventilator. Die Säule kann insofern auch als Tragstütze bezeichnet werden. Die Säule nimmt sowohl die statischen Belastungen als auch die im bestimmungsgemäßen Verwendungsfall auftretenden dynamischen Belastungen auf und leitet dieses direkt ins Fundament des Kühlturmes ab. In der Konsequenz kann im Unterschied zum Stand der Technik der Kühlturmmantel sowie die tragende Struktur (Stützenwald) weniger stark dimensioniert ausgebildet sein. Aufgrund dessen kann eine Materialeinsparung von zum Teil 10 % erreicht werden, womit sich die Gesamtkosten für die Kühlturmerstellung insgesamt spürbar reduzieren. Die erfindungsgemäße Ausgestaltung ist darüber hinaus insofern von Vorteil, als dass eine vereinfachte Montage bzw. Demontage des Axialventilators ermöglicht ist, was insbesondere im Reparaturfall Zeit spart. Einzelkomponenten des Axialventilators können im Defektfall einfach ausgebaut und ausgetauscht werden. Darüber hinaus erlaubt die erfindungsgemäße Konstruktion einen insgesamt kompakteren Aufbau, da die bislang verwendete Aufhängung zur Anordnung des Axialventilators am Kühlturmmantel vollends entfällt. Aufgrund dessen können auch die mit den statischen und dynamischen Belastungen einer solchen Aufhängung einhergehenden Nachteile vermieden werden. Dabei ist ferner von Vorteil, dass mit der erfindungsgemäßen Ausgestaltung übertragene Schwingungen des Ventilators auf das Kühlturmgehäuse und die Kühlturmstruktur deutlich reduziert sind.

Der Axialventilator weist eine Motor-Getriebe-Anordnung sowie ein Ventilatorrad auf, wobei das Ventilatorrad in Höhenrichtung des Kühlturms oberhalb der Motor-Getriebe-Anordnung angeordnet ist. Im Unterschied zum Stand der Technik beispielsweise nach der WO 2009/149954 A1 ist die Höhenausrichtung von Motor-Getriebe-Anordnung einerseits und Venitilatorrad andererseits also umgekehrt. Nach diesem Stand der Technik ist das Ventilatorrad hängend an der Motor-Getriebe-Anordnung angeordnet, womit die Motor-Getriebe-Anordnung einen nicht unerheblichen Beitrag zu den im Verwendungsfall auftretenden dynamischen Belastungen beisteuert, nicht zuletzt auch aufgrund ihres hohen Gewichtes, dass ohne weiteres eine Tonne und mehr betragen kann. Die erfindungsgemäße Konstruktion sieht indes vor, dass sich die Motor-Getriebe-Anordnung des Axialventilators direkt gegenüber der Säule abstützt. Eine Reduzierung der im bestimmungsgemäßen Verwendungsfall auftretenden dynamischen Belastungen kann hierdurch in vorteilhafter Weise erreicht werden.

Die Motor-Getriebe-Anordnung des Axialventilators ist als eine Baueinheit ausgebildet und als solche im Montage- bzw. Demontagefall handhabbar.

Als "eine Baueinheit" ausgebildet meint dabei, dass anstelle eines separat zu handhabenden Motors und eines separat zu handhabenden Getriebes eine Motor-Getriebe-Einheit vorgesehen ist, die integrativ ausgebildet ist. Im Reparaturfall kann diese Einheit vom Ventilatorrad in einfacher Weise abgeflanscht und durch eine neue Einheit ersetzt werden. Reparaturbedingte Ausfallzeiten des Kühlturms können so auf ein Minimum reduziert werden. Damit unterscheidet sich die erfindungsgemäße Konstruktion gegenüber solchen Ausgestaltungen, wonach die Motor-Getriebe-Anordnung keine Baueinheit bildet, sondern vielmehr eine getrennte Anordnung von Motor einerseits und Getriebe andererseits vorgesehen ist, wie zum Beispiel mit den schon eingangs genannten Dokumenten EP 0 413 409 B1, EP 0 558 300 B1 und EP 0 168 525 B1 beschrieben. Damit bezeichnet sich die erfindungsgemäße Ausgestaltung gegenüber diesem Stand der Technik insbesondere durch den kompakten Aufbau aus, was sowohl im Falle der Montage als auch im Falle der Demontage beispielsweise zu Reparaturzwecken von erheblichem Vorteil ist, weil nicht nur die Handhabung vereinfacht ist, sondern auch die Ausfallzeiten insbesondere im Reparaturfall auf ein Minimum reduziert werden können.

Gemäß der Erfindung ist vorgesehen, dass zur Anordnung der Motor-Getriebe-Anordnung an der Säule ein Verbindungsflansch in Form einer Platte zum Einsatz kommt. Dieser Verbindungsflansch ist beabstandet zu einer von der Säule getragenen Flanschplatte angeordnet. Es können zu diesem Zweck Stützstreben vorgesehen sein, die beispielsweise in Form von Distanzhülsen ausgebildet sind, die ihrerseits von Gewindestangen durchgegriffen sind. Im endfertig montierten Zustand bilden die Flanschplatte und der Verbindungsflansch aufgrund ihrer beabstandeten Anordnung einen Aufnahmeraum zwischen sich aus. Dieser Aufnahmeraum dient der Aufnahme der Motor-Getriebe-Anordnung, wobei vorgesehen ist, dass diese hängend am Verbindungsflansch angeordnet ist. Auf diese Weise kann eine dämpfungswirksame Entkopplung erreicht werden. Darüber hinaus ist eine Demontage im Reparaturfall besonders einfach, da es hierfür ausreichend ist, die die Motor-Getriebe-Anordnung mit dem Verbindungsflansch verbindenden Befestigungsmittel zu lösen. Als Befestigungsmittel können in diesem Zusammenhang beispielsweise Schrauben vorgesehen sein. Je nach Dimensionierung können vier Schrauben zur Anordnung der Motor-Getriebe-Anordnung am Verbindungsflansch ausreichend sein, so dass im Reparaturfall lediglich diese vier Schrauben für eine Demontage zu lösen sind.

Im Unterschied beispielsweise zur bereits vorgenannten US 4,976,895 erfolgt nach der erfindungsgemäßen Ausgestaltung keine direkte Motoranordnung an einer von der Säule getragenen Flanschplatte. Es sind stattdessen vielmehr eine Flanschplatte einerseits und ein Verbindungsflansch andererseits vorgesehen. Dabei ist der als Platte ausgebildete Verbindungsflansch beabstandet zur Flanschplatte angeordnet, wobei der infolge der beabstandeten Anordnung ausgebildete Aufnahmeraum der Aufnahme der Motor-Getriebe-Anordnung dient. Zur beabstandeten Anordnung des Verbindungsflansches an der Flanschplatte kommen bevorzugter Weise Distanzhülsen zum Einsatz, die im bestimmungsgemäßen Verwendungsfall auf Druck belastet sind. Die Distanzhülsen sind von Gewindestangen durchgriffen, die sich einerseits an der Flanschplatte und andererseits am Verbindungsflansch abstützen und im bestimmungsgemäßen Verwendungsfall auf Zug beansprucht sind. Die Motor-Getriebe-Anordnung ist hängend am Verbindungsflansch angeordnet, gegebenenfalls unter Zwischenschaltung eines Dämpfungselements, beispielsweise einer Dämpfungsmatte und/oder dergleichen. Aufgrund der hängenden Anordnung der Motor-Getriebe-Anordnung können die im bestimmungsgemäßen Verwendungsfall auftretenden dynamischen Belastungen zumindest zum Teil aufgefangen und absorbiert werden, so dass eine verringerte Beanspruchung der den Axialventilator insgesamt tragenden Säule stattfindet. Darüber hinaus ist die hängende Anordnung insofern von Vorteil, als dass in denkbar einfacher Weise eine Demontage der Motor-Getriebe-Anordnung vorgenommen werden kann.

Die Motor-Getriebe-Anordnung ist beispielsweise mit der Flanschplatte verschraubt. Zum Zwecke der Demontage beispielsweise im Reparaturfall sind diese Schrauben zu lösen, was als dann eine Entnahme der gesamten Motor-Getriebe-Anordnung gestattet. Auf diese Weise ist es in einfacher Weise möglich, eine defekte Motor-Getriebe-Anordnung gegen eine neue zu tauschen, was die Ausfallzeit des Kühlturmes auf ein Minimum reduziert. Nach einem Austausch der defekten Motor-Getriebe-Anordnung kann diese dann hinsichtlich ihrer technischen Funktionstätigkeit überprüft und gegebenenfalls repariert werden.

Insgesamt wird mit der erfindungsgemäßen Konstruktion eine Anordnung vorgeschlagen, die gegenüber dem Stand der Technik vereinfacht ist und zwar sowohl im Aufbau als auch in der Handhabung und die darüber hinaus vergleichsweise kostengünstig ist.

Es ist gemäß einem weiteren Merkmal der Erfindung vorgesehen, dass sich der Verbindungsflansch unter Zwischenordnung von Stützstreben gegenüber der säulenseitigen Flanschplatte abstützt. Bei diesen Stützstreben kann es sich im einfachsten Fall um eine Rahmenkonstruktion, ein Gestänge oder dergleichen handeln. Von erfindungswesentlicher Bedeutung ist, dass der Verbindungsflansch beabstandet zur Flanschplatte ausgebildet ist, wobei der Beabstandungsraum den Aufnahmeraum für die Motor-Getriebe-Anordnung ausbildet, so dass diese in erfindungsgemäßer Weise hängend am Verbindungsflansch angeordnet werden kann.

Gemäß einer bevorzugten Ausführungsform sind die Stützstreben als Distanzhülsen ausgebildet. Dabei ist eine jede Distanzhülse von einer Gewindestange durchgriffen, die sich einendseitig an der Flanschplatte und anderendseitig am Verbindungsflansch abstützt. Je nach Größe und Gewicht der Motor-Getriebe-Anordnung und/oder des Ventilatorrades können eine Mehrzahl von Distanzhülsen vorgesehen sein. Bevorzugt ist indes eine Ausgestaltungsform, gemäß der vier solcher Distanzhülsen zum Einsatz kommen.

Gemäß einem weiteren Merkmal der Erfindung ist vorgesehen, dass zur zusätzlichen Abstützung der Flanschplatte gegenüber der Säule Winkelbleche vorgesehen sind. Dabei bestimmt sich die Größe und Anzahl der vorzusehenden Winkelbleche nach der abzufangenden Traglast einerseits und der Größe der Flanschplatte in Relation zum Durchmesser der Säule andererseits.

Zur Anordnung der Motor-Getriebe-Anordnung am Verbindungsflansch dient bevorzugter Weise eine Befestigungsplatte, die verbindungsflanschseitig an der Motor-Getriebe-Anordnung ausgebildet ist. Dabei kann die Anordnung der Motor-Getriebe-Anordnung am Verbindungsflansch unter Zwischenordnung eines Dämpfungselements erfolgen.

Die Motor-Getriebe-Anordnung ist bevorzugter Weise mit dem Verbindungsflansch verschraubt, das insbesondere im Reparaturfall eine schnelle Demontage gestattet.

Die Säule, auch Tragstütze genannt, durchragt gemäß einem weiteren Merkmal der Erfindung die Fluidkühleinrichtung in Höhenrichtung. Die Säule stellt insofern eine selbsttragende Konstruktion dar. Sie ist einerseits im Fundament des Kühlturms verankert und trägt anderendseitig den darauf angeordneten Axialventilator. Je nach Ausgestaltung der Säule kann in einer alternativen Ausgestaltung der Erfindung auch vorgesehen sein, dass sich Teile der Fluidkühleinrichtung an der als Tragstütze ausgebildeten Säule mit abstützen.

Gemäß einem besonderen Vorschlag der Erfindung ist vorgesehen, dass die Säule ein Zulaufrohr für die Fluidzuführung zur Fluidkühleinrichtung aufweist. Gegebenenfalls kann die Säule auch durch das Zulaufrohr gebildet sein. In jedem Fall wird mit dieser besonderen Ausgestaltung eine sehr kompakte Bauform sowie eine Multifunktionalität erreicht. Das ohnehin zur Flüssigkeitszuführung vorgesehene Zulaufrohr der Fluidkühleinrichtung dient als Säule zur tragenden Abstützung des Axialventilators. Dabei kann je nach Dimensionierung des Kühlturms die Ausgestaltung des ohnehin vorgesehenen Zulaufrohrs bereits ausreichend sein, die von einem Axialventilator hervorgerufenen statischen und dynamischen Belastungen aufzunehmen. Gegebenenfalls können zur Belastungsaufnahme durch das Zulaufrohr auch Verstärkungen und/oder Aussteifungen desselben vorgesehen sein.

Zur Aufnahme vergleichsweise hoher Belastungen kann auch vorgesehen sein, die Säule zu tragenden Abstützung des Axialventilators aus Stahlbeton zu bilden, wobei das Zulaufrohr für die Fluidkühleinrichtung in Längsrichtung der Säule verlaufend in diese integriert ist, beispielsweise als Stahl- oder Kunststoffrohr, oder auch als Betonkanal. Im Falle des Betonkanals wird hierdurch die Säule gebildet.

Die Säule schließt gemäß einem weiteren Merkmal der Erfindung oberseitig mit einer Flanschplatte ab. Diese Flanschplatte dient bevorzugter Weise der lösbaren Verbindung der Säule mit einem Axialventilator.

Gemäß einem weiteren Merkmal der Erfindung ist ein Stützgestänge für die Säule vorgesehen. Die Ausbildung eines solchen Stützgestänges dient insbesondere dazu, im Betriebsfall auftretende dynamische Belastungen abzufangen. Dabei kann vorgesehen sein, dass Stützgestänge säulenentfernt im Fundament des Kühlturms und/oder im Kühlturmmantel zu verankern.

Je nach Dimensionierung des Stützgestänges kann die Dimensionierung der Säule geringer ausfallen als im Vergleich zu einer Konstruktion ohne Stützgestänge. Je nach Anwendungsfall kann also vorgesehen sein, zur Reduzierung der Dimensionierung der Säule ein Stützgestänge vorzusehen oder ein ohnehin vorzusehendes Stützgestänge entsprechend zu dimensionieren.

Weitere Vorteile und Merkmale der Erfindung ergeben sich aus der nachfolgenden Beschreibung anhand der Figuren. Dabei zeigen
- Figur 1: in schematischer Seitenansicht eine Kühlturmanordnung mit zwei Kühltürmen nach der Erfindung;
- Figur 2: die Kühlturmanordnung nach Figur 1 gemäß Sichtrichtung II nach Figur 1;
- Figur 3: in einer Detailansicht eine Motor-Getriebe-Anordnung gemäß Ausschnitt III nach Figur 2;
- Figur 4: in schematische Darstellung einen Kühlturm nach der Erfindung in Seitenansicht gemäß einer zweiten Ausführungsform;
- Figur 5: in einer Detailansicht die Motor-Getriebe-Anordnung nach Figur 4 und
- Figur 6: in schematischer Seitenansicht einen Kühlturm nach dem Stand der Technik.

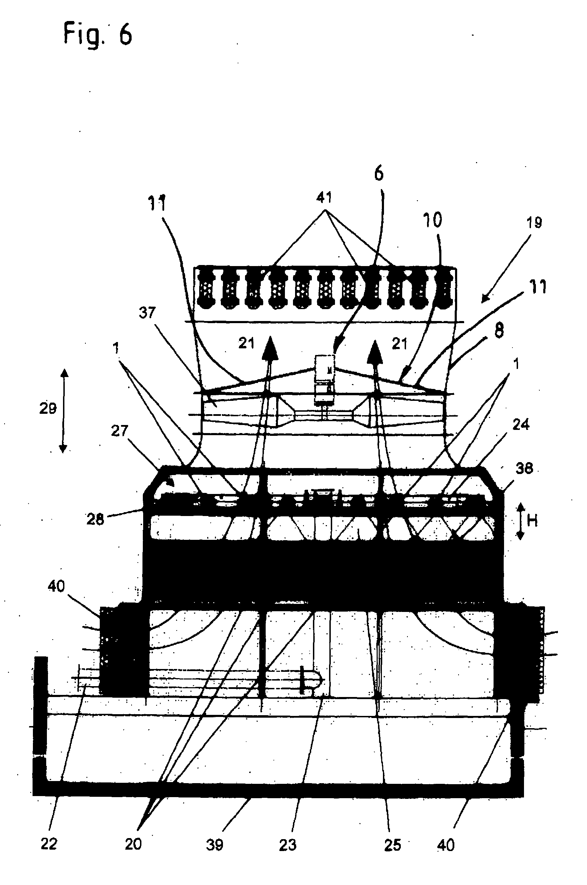

Figur 6 zeigt einen Kühlturm 19, wie er aus dem Stand der Technik nach der WO 2009/149954 A1 bekannt ist. Der Kühlturm 19 weist einen Fluidkühleinrichtung 27 auf. Diese verfügt ihrerseits über eine Flüssigkeitsverteileinrichtung 28 einerseits und Kühleinbauten 20 andererseits. In Höhenrichtung 29 des Kühlturms 19 ist die Flüssigkeitsverteileinrichtung 28 in einer Höhe H oberhalb der Kühleinbauten 20 bzw. oberhalb einer gleichmäßig mit Flüssigkeit zu beaufschlagenden Querschnittsfläche 38 angeordnet. Im gezeigten Ausführungsbeispiel nach Figur 6 fallen der Flüssigkeitsverteilquerschnitt 38 und die obere Abschlussfläche der Kühleinbauten 20 zusammen.

Die Flüssigkeitsverteileinrichtung 28 verfügt über eine Mehrzahl von Verteilerrohren 24, die an ein gemeinsames Zulaufrohr 23 flüssigkeitsseitig angeschlossen sind.

Durch den Kühlturm 19 wird mittels eines saugend angeordneten Ventilatorrades 37 als Kühlmedium Umgebungsluft in Entsprechung der Pfeile 21 mit Bezug auf die Zeichnungsebene nach Figur 6 von unten nach oben geführt. Im Zuge des Hindurchführens der Luft 21 durch den Kühlturm 19 passiert die Luft 21 die Kühleinbauten 20, die im gezeigten Ausführungsbeispiel dreilagig ausgebildet sind.

Die mittels des Kühlturmes 19 abzukühlende Flüssigkeit, beispielsweise Wasser, wird über eine Zuführleitung 22 in das Zulaufrohr 23 eingeleitet. Von dort aus gelangt es zu den Verteilerrohren 24, die zum Zwecke des Flüssigkeitsaustritts mit tangential angesetzten Vollkegeldüsen 1 ausgerüstet sind. Der Abstand zwischen den Austrittsöffnungen der Vollkegeldüsen 1 und der oberen Kante der Kühleinbauten 20 bestimmt die Sprühhöhe H, welche beispielsweise 600 mm beträgt.

Das gleichmäßig über den Kühleinbauten 20 verteilte Warmwasser 25 durchrieselt diese im hier gezeigten Fall im Gegenstrom zur von unten nach oben beförderten Kühlluft 21.

Das nach einem Durchrieseln der Kühleinbauten 20 abgekühlte Warmwasser 25 tropft aus den Kühleinbauten 20 ab und wird in der Wassersammelwanne 39 aufgefangen und von dort zu den zu kühlenden Anlagen weitergeführt.

Zur Schalldämpfung weist der Kühlturm 19 sowohl lufteintrittsseitig als auch luftaustrittsseitig Schalldämpfer 40 und 41 auf.

Wie die Darstellung nach Figur 6 erkennen lässt, ist das Ventilatorrad 37 hängend an einer Motor-Getriebe-Anordnung 6 - auch Getriebemotor genannt - angeordnet. Diese Motor-Getriebe-Anordnung 6 stützt sich ihrerseits hängend am Kühlturmmantel 8 ab, zu welchem Zweck eine aus einzelnen Streben 11 gebildete Aufhängung 10 vorgesehen ist.

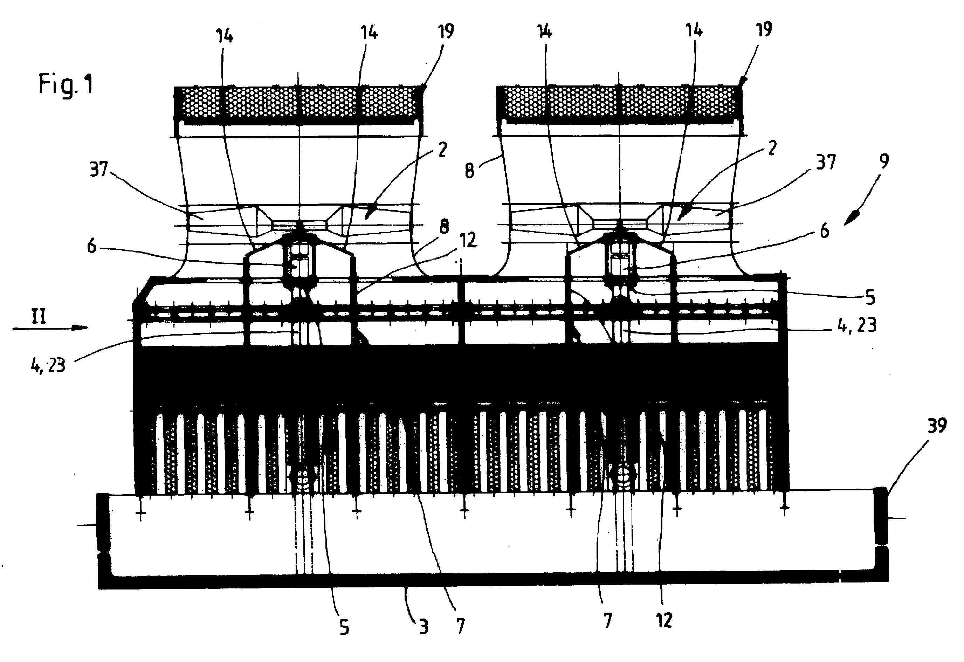

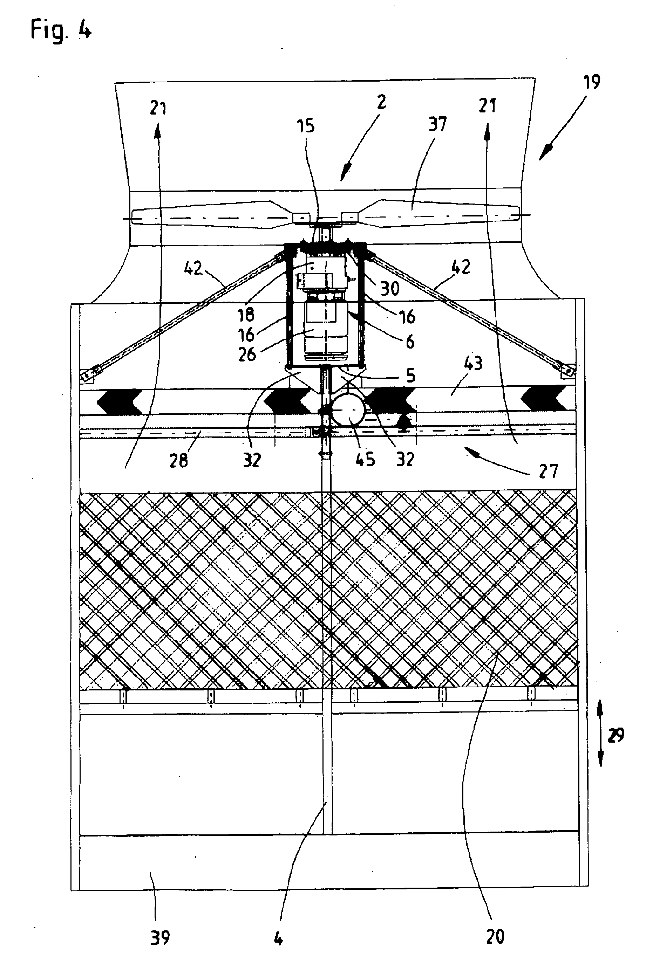

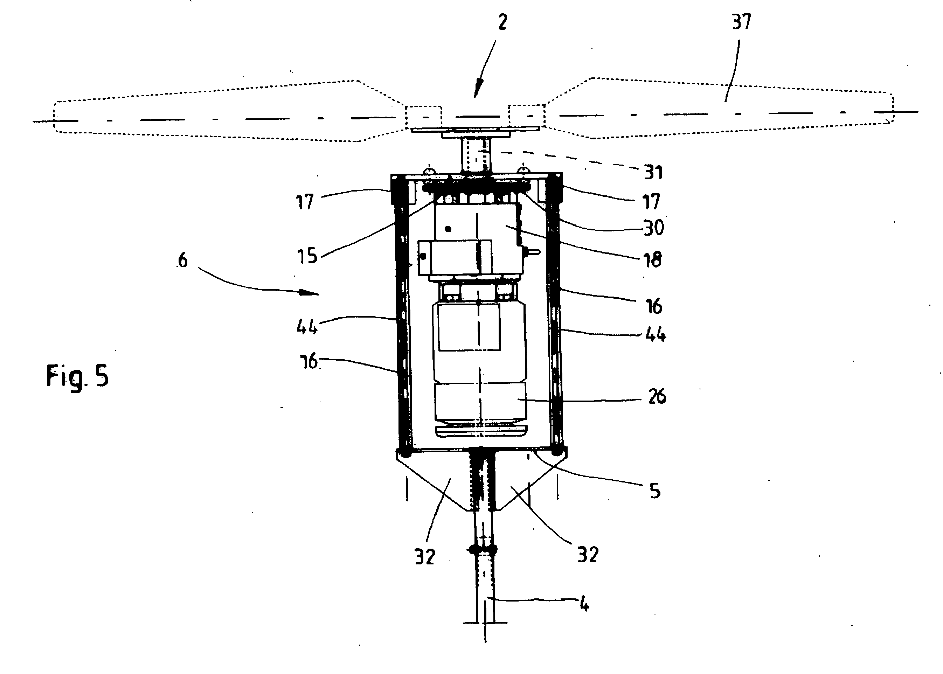

Die Ausgestaltung nach der Erfindung ist in den Figuren 1 bis 5 gezeigt, wobei die Figuren 1 bis 3 eine erste Ausführungsform und die Figuren 4 und 5 eine zweite Ausführungsform betreffen.

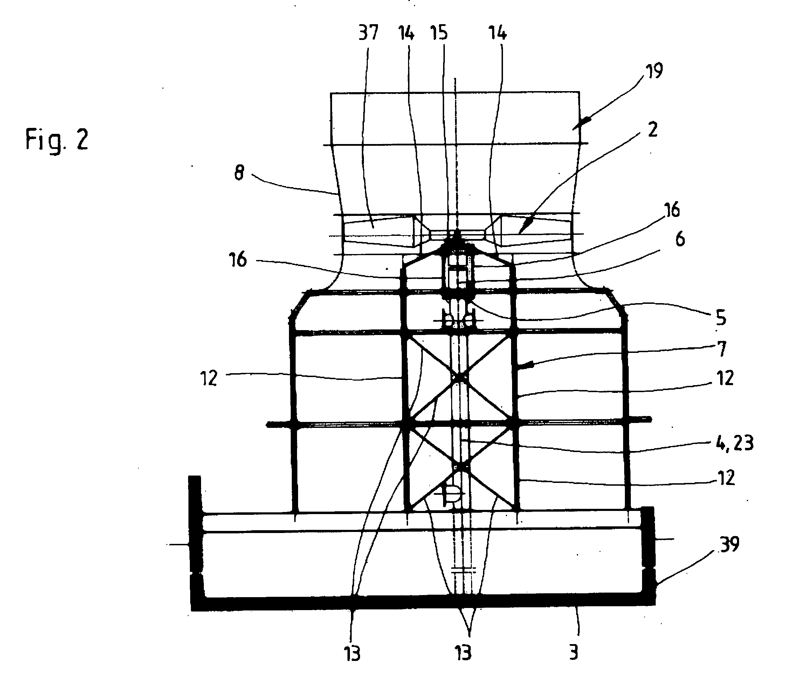

Figur 1 lässt in schematischer Seitenansicht eine Kühlturmanordnung 9 erkennen. Diese Kühlturmanordnung 9 verfügt über zwei Kühltürme 19, die jeweils in erfindungsgemäßer Weise ausgebildet sind. Eine schematische Seitenansicht auf einen der beiden Kühltürme 19 der Kühlturmanordnung 9 ist Figur 2 zu entnehmen.

Im Unterschied zum vorerläuterten Stand der Technik nach Figur 6 verfügt ein Kühlturm 19 nach der Erfindung über einen Axialventilator 2, der sich nicht hängend gegenüber dem Kühlturmmantel 8 abstützt. Zur Anordnung des Axialventilators 2 ist vielmehr eine Säule 4 vorgesehen, die ihrerseits im Fundament 3 des Kühlturms 19 verankert ist.

"Verankert" im Sinne der Erfindung meint dabei nicht nur eine direkte Verankerung im Fundament des Kühlturms, sondern auch eine indirekte Verankerung unter Zwischenschaltung weiterer Stützelemente. In diesem Sinn kann insbesondere aufgrund baulicher Gegebenheiten mit Blick insbesondere auf die Fluidkühleinrichtung vorgesehen sein, dass die den Axialventilator abstützende Säule ihrerseits durch Stützelemente getragen ist. Die Säule kann durch diese Stützelemente auch gebildet sein. Bei solchen Stützelementen kann es sich um säulenartige Stützkörper oder ähnliches handeln, die im Fundament des Kühlturmes verankert sind. Dabei kann vorgesehen sein, dass die Stützelemente bauseits vorgegebene Bauräume ausnutzen, was insgesamt zu einer kompakten und wenig ausladenden Konstruktion führt.

Die Säule 4 trägt oberseitig eine Flanschplatte 5. Diese dient der insbesonderen lösbaren Verbindung der Säule 4 mit dem Axialventilator 2.

Der Axialventilator 2 ist seinerseits aus einer Motor-Getriebe-Anordnung 6 und einem Ventilatorrad 37 gebildet. Gemäß der erfindungsgemäßen Ausgestaltung stützt sich die Motor-Getriebe-Anordnung 6 auf der Säule 4 ab. Das Ventilatorrad 37 stützt sich seinerseits auf der Motor-Getriebe-Anordnung 6 ab, so dass insgesamt ein Aufbau erreicht ist, wonach das Ventilatorrad 37 im Unterschied zum vorerläuterten Stand der Technik nach Figur 6 in Höhenrichtung 29 des Kühlturms 19 oberhalb der Motor-Getriebe-Anordnung 6 angeordnet ist.

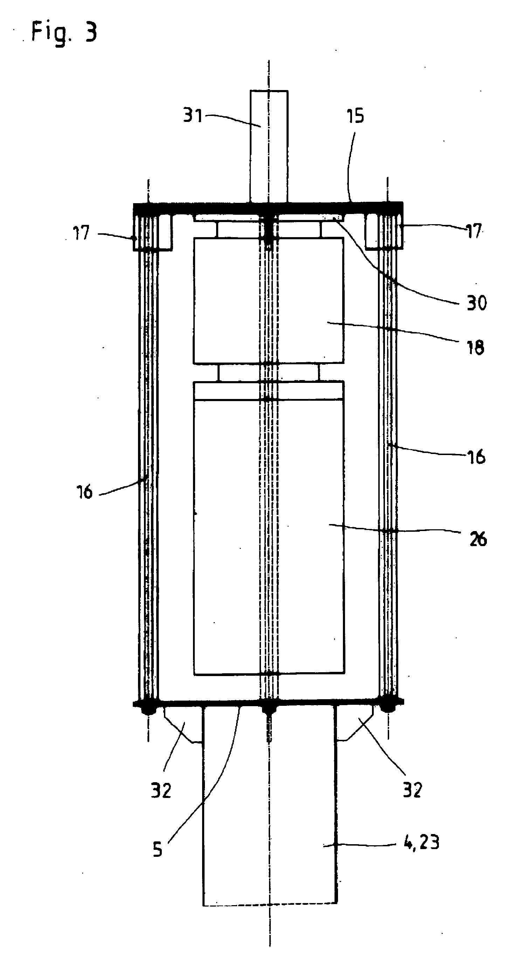

Die Darstellungen nach den Figuren 2 und 3 lassen weitere Details der Erfindung erkennen.

Für eine zusätzliche Abstützung insbesondere gegenüber im bestimmungsgemäßen Verwendungsfall auftretenden dynamischen Belastungen kann ein Stützgestänge 7 vorgesehen sein. Dieses ist vorzugsweise im Fundament 3 des Kühlturms 9 verankert. Es besteht aus mehreren Gerüststreben 12, beispielsweise vier, die untereinander durch Verstrebungen 13 miteinander verbunden sind. Auf diese Weise wird insgesamt ein Fachwerk ausgebildet, das unter vergleichsweise geringem Materialeinsatz auch hohe statische und dynamische Belastungen aufzunehmen in der Lage ist.

Die Gerüststreben 12 des Stützgestänges 7 greifen über Flanschstreben 14 mit Bezug auf die Höhenrichtung 29 direkt unterhalb des Ventilatorrades 37 an der Motor-Getriebe-Anordnung 6 an, wie insbesondere die Darstellung nach Figur 2 erkennen lässt. In vorteilhafter Weise wird hierdurch ein direkter Abfluss der im bestimmungsgemäßen Verwendungsfall auftretenden dynamischen Belastungen über das Stützgestänge 7 in das Fundament 3 des Kühlturms 19 erreicht.

Die Säule 4 kann gemäß dem in den Figuren gezeigten Beispiel durch das zum Zwecke der Flüssigkeitszufuhr zur Flüssigkeitsverteileinrichtung 28 ohnehin vorgesehene Zulaufrohr 23 gebildet sein. Auf diese Weise wird eine besonders kompakte Ausgestaltung der Erfindung erreicht.

Die Säule 4 schließt oberseitig mit einer Flanschplatte 5 ab, wie dies insbesondere der Detaildarstellung nach Figur 3 zu entnehmen ist. Für eine zusätzliche Abstützung der Flanschplatte 5 können Winkelbleche 32 vorgesehen sein. Derartige Winkelbleche 32 sind insbesondere dann von Vorteil, wenn die Flanschplatte 5, wie in der Darstellung nach Figur 3 gezeigt, einen größeren Querschnittsdurchmesser als die Säule 4 aufweist. Zur Flanschplatte 5 beabstandet ist ein Verbindungsflansch 15 vorgesehen, der gleichfalls plattenförmig ausgebildet ist. Der Verbindungsflansch 15 stützt sich gegenüber der Flanschplatte 5 mittels Tragstützen 16 ab. Diese sind im gezeigten Ausführungsbeispiel als Gewindestangen ausgebildet, die verbindungsflanschseitig in vom Verbindungsflansch 15 getragene Gewindeaufnahmen 17 eingreifen. Dabei durchgreifen die Gewindestangen 16 jeweils der Abstandshaltung von Verbindungsflansch 15 und Flanschplatte 5 dienende Distanzhülsen 44. Der Verbindungsflansch 15 dient der hängenden Aufnahme der Motor-Getriebe-Anordnung 6. Dabei ist das Getriebe 18 der Motor-Getriebe-Anordnung 6 mittels einer Befestigungsplatte 30 hängend am Verbindungsflansch 15 angeordnet. Am Getriebe 18 ist wiederum der Motor 26 hängend angeordnet, so dass insgesamt eine hängende Anordnung der Motor-Getriebe-Anordnung 6 am Verbindungsflansch 15 erreicht ist. Die Antriebswelle 31 für das Ventilatorrad 37 durchragt ausgehend vom Getriebe 18 den Verbindungsflansch 15.

Die Figuren 4 und 5 zeigen eine zweite Ausführungsform der Erfindung.

Der Kühlturm 19 in der Ausgestaltung nach Figur 4 verfügt in schon vorbeschriebener Weise über eine Flüssigkeitsverteileinrichtung 28. Im Unterschied zur vorbeschriebenen Ausgestaltungsform wird die Flüssigkeitsverteileinrichtung 28 jedoch nicht über ein im Innenraum des Kühlturms 19 verlaufendes Zulaufrohr mit dem zu verteilenden Fluid versorgt. Gemäß der hier dargestellten Ausführungsform erfolgt vielmehr eine seitliche Fluidzuführung über ein Zuführrohr 45. Dementsprechend dient bei dem Ausführungsbeispiel nach den Figuren 4 und 5 die Säule 4 auch nicht als Zulaufrohr.

Die Säule 4 nach dem Ausführungsbeispiel gemäß den Figuren 4 und 5 ist als reine Stützsäule ausgebildet. Sie kann als Rohr ausgestaltet oder aus Vollmaterial gebildet sein.

Für eine ergänzende Abstützung des Axialventilators 2 dienen im gezeigten Ausführungsbeispiel nach den Figuren 4 und 5 Diagonalstreben 42. Diese greifen einerseits an der Motor-Getriebe-Anordnung 6 und andererseits am Kühlturmmantel 8 an. Es sind bevorzugterweise insgesamt vier Diagonalstreben 42 vorgesehen.

Unterhalb der Motor-Getriebe-Anordnung 6 ist bei dem Ausführungsbeispiel nach den Figuren 4 und 5 ein Tropfenabscheider 43 vorgesehen. Dieser soll insbesondere dazu dienen, vom Axialventilator 2 im Betriebsfall mitgerissene Fluidpartikel aus der geförderten Luft 21 abzuscheiden und in Richtung der Kühleinbauten 20 abtropfen zu lassen.

Figur 5 lässt in einer Detailansicht insbesondere die Motor-Getriebe-Anordnung 6 erkennen. Diese entspricht dem Grunde nach derjenigen nach Figur 3. Im Unterschied zur Ausgestaltung nach Figur 3 kommt als Säule 4 aber nicht das Zulaufrohr 23 zum Einsatz. Die Säule dient im gezeigten Ausführungsbeispiel ausschließlich als Stützsäule der Abstützung des Axialventilators 2. In der Konsequenz ist die Säule 4 in der Ausgestaltung nach den Figuren 4 und 5 im Durchmesser auch geringer ausgestaltet als diejenige Säule 4 nach dem Ausführungsbeispiel gemäß den Figuren 1 bis 3. Dementsprechend fallen bei der Ausgestaltung nach den Figuren 4 und 5 die Winkelbleche 32 in ihrer Dimensionierung auch größer aus. Das Grundprinzip ist bei beiden Ausführungsformen aber identisch.

Bei der Ausführungsform nach Figur 5 sind der Motor 26 und das Getriebe 18 der Motor-Getriebe-Anordnung 6 in Höhenrichtung 29 übereinander angeordnet, wobei das Getriebe 18 in Höhenrichtung 29 oberhalb des Motors 26 positioniert ist. Die Erfindung ist nicht auf diese Anordnung von Motor 26 und Getriebe 18 beschränkt. Es kann in einer alternativen Ausgestaltung auch vorgesehen sein, dass der Motor 26 oberhalb des Getriebes 18 angeordnet ist. Ferner kann auch eine nebengeordnete Ausgestaltung von Motor 26 und Getriebe 18 vorgesehen sein. In diesem Fall ist das Getriebe bevorzugterweise am Ventilatorrad 37 angeflanscht. Der Motor 26 ist dem Getriebe 18 nebengeordnet, wobei er unter Vermeidung einer separaten Verbindungswelle direkt an das Getriebe 18 angeflanscht ist. Gemäß einer dritten Alternative kann auf das Getriebe 18 auch verzichtet werden, wobei dann der Motor 26 direkt mit dem Ventilatorrad 37 gekoppelt ist. Eine solche Anwendung findet insbesondere dann statt, wenn es möglich ist, die vom Motor abgegebene Drehzahl auf das Ventilatorrad 37 zu übertragen, eine getriebetechnische Reduzierung der Motordrehzahl also nicht erforderlich ist.

Figur 5 lässt im Übrigen noch erkennen, dass zwischen der Flanschplatte 5 und dem Verbindungsflansch 15 Distanzhülsen 44 angeordnet sind. Diese Distanzhülsen 44 sind von den als Gewindestangen ausgebildeten Tragstützen 16 durchgriffen. Im endmontierten Zustand werden die Tragstützen 16 auf Zug und die Distanzhülsen 44 auf Druck belastet.

Die erfindungsgemäße Ausgestaltung kann auch in Kombination mit sogenannten Trockenkühltürmen Verwendung finden. In diesem Fall ist die Fluidkühleinrichtung 27 aus einem Wärmetauscher als wesentliche Baukomponente gebildet. Eine Verrieselung von Wasser findet gemäß dieser Variante nicht statt. Die Erfindung ist insofern nicht auf Kühltürme beschränkt, die eine Flüssigkeitsverteileinrichtung aufweisen.

**Bezusgszeichenliste**

| | | | |
|---|---|---|---|
| 1 | Vollkegeldüse | 26 | Motor |
| 2 | Axialventilator | 27 | Fluidkühleinrichtung |
| 3 | Fundament | 28 | Flüssigkeitsverteileinrichtung |
| 4 | Säule | 29 | Höhenrichtung |
| 5 | Flanschplatte | 30 | Befestigungsplatte |
| 6 | Motor-Getriebe-Anordnung | 31 | Welle |
| 7 | Stützgestänge | 32 | Winkelblech |
| 8 | Kühlturmmantel | 37 | Ventilatorrad |
| 9 | Kühlturmanordnung | 38 | Flüssigkeitsverteilquerschnitt |
| 10 | Aufhängung | 39 | Wassersammelwanne |
| 11 | Strebe | 40 | Schalldämpfer |
| 12 | Gerüststrebe | 41 | Schalldämpfer |
| 13 | Verstrebung | 42 | Diagonalstrebe |
| 14 | Flanschstrebe | 43 | Tropfenabscheider |
| 15 | Verbindungsflansch | 44 | Distanzhülse |
| 16 | Tragstütze (Gewindestange) | 45 | Zuführrohr |
| 17 | Gewindeaufnahme | | |
| 18 | Getriebe | | |
| 19 | Kühlturm | | |
| 20 | Kühleinbauten | | |
| 21 | Luft | | |
| 22 | Zuführleitung | | |
| 23 | Zulaufrohr | | |
| 24 | Verteilrohr | | |
| 25 | Warmwasser | | |

## Patentansprüche

1. Kühlturm mit einer Fluidkühleinrichtung (27) und einem Axialventilator (2), wobei der Axialventilator (2) in Höhenrichtung (29) des Kühlturms (19) oberhalb der Fluidkühleinrichtung (27) angeordnet und von einer im Fundament (3) des Kühlturms (19) verankerten Säule (4) getragen ist, wobei der Axialventilator (2) eine als eine Baueinheit ausgebildete Motor-Getriebe-Anordnung (6) und ein Ventilatorrad (37) aufweist, wobei das Ventilatorrad (37) in Höhenrichtung (29) des Kühlturms (19) oberhalb der Motor-Getriebe-Anordnung (6) angeordnet ist, **dadurch gekennzeichnet, dass** zur Anordnung der Motor-Getriebe-Anordnung (6) an der Säule (4) ein Verbindungsflansch (15) in Form einer Platte vorgesehen ist, der beabstandet zu einer die Säule (4) oberseitig abschließenden Flanschplatte (5) angeordnet ist, wobei die Motor-Getriebe-Anordnung (6) hängend am Verbindungsflansch (15) angeordnet ist.

2. Kühlturm nach Anspruch 1, **dadurch gekennzeichnet, dass** sich der Verbindungsflansch (15) unter Zwischenordnung von Stützstreben gegenüber der säulenseitigen Flanschplatte (5) abstützt.

3. Kühlturm nach Anspruch 2, **dadurch gekennzeichnet, dass** eine Stützstrebe in Form einer Distanzhülse (44) ausgebildet ist.

4. Kühlturm nach Anspruch 3, **dadurch gekennzeichnet, dass** eine Distanzhülse (44) von einer Gewindestange (16) durchgegriffen ist.

5. Kühlturm nach Anspruch 4, **dadurch gekennzeichnet, dass** sich eine Gewindestange (16) kopfseitig gegenüber der Flanschplatte (5) abstützt und gewindeseitig in eine vom Verbindungsflansch (15) getragene Gewindeaufnahme (17) eingreift.

6. Kühlturm nach einem der vorhergehenden Ansprüche, **dadurch gekennzeichnet, dass** für eine zusätzliche Abstützung der Flanschplatte (5) gegenüber der Säule (4) Winkelbleche (32) vorgesehen sind.

7. Kühlturm nach einem der vorhergehenden Ansprüche, **dadurch gekennzeichnet, dass** die Motor-Getriebe-Anordnung (6) verbindungsflanschseitig eine Befestigungsplatte (30) aufweist.

8. Kühlturm nach einem der vorhergehenden Ansprüche, **dadurch gekennzeichnet, dass** die Motor-Getriebe-Anordnung (6) mit dem Verbindungsflansch (15) verschraubt ist.

9. Kühlturm nach einem der vorhergehenden Ansprüche, **dadurch gekennzeichnet, dass** die Säule (4) die Fluidkühleinrichtung (27) in Höhenrichtung (29) durchragt.

10. Kühlturm nach einem der vorhergehenden Ansprüche, **dadurch gekennzeichnet, dass** die Säule (4) ein Zulaufrohr (23) für die Fluidzufuhr zur Fluidkühleinrichtung (27) aufweist.

11. Kühlturm nach einem der vorhergehenden Ansprüche, **gekennzeichnet durch** ein Stützgestänge (7) für die Säule (4).

12. Kühlturm nach Anspruch 11, **dadurch gekennzeichnet, dass** das Stützgestänge (7) säulenentfernt im Fundament (3) des Kühlturms (9) verankert ist.

13. Kühlturm nach Anspruch 11, **dadurch gekennzeichnet, dass** das Stützgestänge (7) säulenentfernt im Kühlturmmantel (8) verankert ist.

## Claims

1. A cooling tower comprising a fluid cooling device (27) and an axial fan (2), wherein the axial fan (2) is located above the fluid cooling device (27) in the direction of height (29) of the cooling tower (19) and is carried by a column (4) which is anchored in the foundation (3) of the cooling tower (19), wherein the axial fan (2) comprises a motor-transmission arrangement (6) configured as a constructional unit and a fan wheel (37), wherein the fan wheel (37) is arranged above the motor-transmission arrangement (6) in the direction of height (29) of the cooling tower (19), **characterized in that** a connection flange (15) in form of a plate is provided for arranging the motor-transmission arrangement (6) on the column (4), which connection flange (15) is spaced apart from a flange plate (5) which closes the column (4) on the top side, wherein the motor-transmission arrangement (6) is mounted in a hanging manner on the connection flange (15).

2. A cooling tower according to claim 1, **characterized in that** the connection flange (15) presses against the flange plate (5) on the side of the column with interposition of supporting struts.

3. A cooling tower according to claim 2, **characterized in that** one supporting strut is designed in form of a spacer sleeve (44).

4. A cooling tower according to claim 3, **characterized in that** a spacer sleeve (44) is traversed by a threaded rod (16).

5. A cooling tower according to claim 4, **characterized in that** a threaded rod (16) presses with its head against the flange plate (5) and engages on the side of the thread into a thread receiver (17) carried by the connection flange (15).

6. A cooling tower according to one of the preceding claims, **characterized in that** folded sheets (32) are provided for an additional support of the flange plate (5) on the column (4).

7. A cooling tower according to one of the preceding claims, **characterized in that** the motor-transmission arrangement (6) comprises a fixing plate (30) on the side of the connection flange.

8. A cooling tower according to one of the preceding claims, **characterized in that** the motor-transmission arrangement (6) is screwed with the connection flange (15).

9. A cooling tower according to one of the preceding claims, **characterized in that** the column (4) protrudes through the fluid cooling device (27) in the direction of height (29).

10. A cooling tower according to one of the preceding claims, **characterized in that** the column (4) comprises an inlet pipe (23) for the fluid inlet into the fluid cooling device (27).

11. A cooling tower according to one of the preceding claims, **characterized by** supporting rods (7) for the column (4).

12. A cooling tower according to claim 11, **characterized in that** the supporting rods (7) are anchored in the foundation (3) of the cooling tower (9) at a distance from the column.

13. A cooling tower according to claim 11, **characterized in that** the supporting rods (7) are anchored in the cooling tower casing (8) at a distance from the column.

## Revendications

1. Tour de refroidissement comprenant un dispositif de refroidissement de fluide (27) et un ventilateur axial (2), dans lequel le ventilateur axial (2) est disposé au-dessus du dispositif de refroidissement de fluide (27) dans la direction de hauteur (29) de la tour de refroidissement (19) et est porté par une colonne (4) ancrée dans la fondation (3) de la tour de refroidissement (19), le ventilateur axial (2) comprenant un groupe moteur-transmission (6) configuré comme un ensemble et une roue de ventilateur (37), la roue de ventilateur (37) étant disposée au-dessus du groupe moteur-transmission (6) dans la direction de hauteur (29) de la tour de refroidissement (19), **caractérisée en ce qu'**une bride de liaison (15) en forme d'une plaque est prévue pour disposer le groupe moteur-transmission (6) sur la colonne (4), laquelle bride de liaison (15) est espacée d'une plaque de bride (5) qui ferme la colonne (4) sur sa face supérieure, le groupe moteur-transmission (6) étant disposé de manière suspendue sur la bride de liaison (15).

2. Tour de refroidissement selon la revendication 1, **caractérisée en ce que** la bride de liaison (15) s'appuie contre la plaque de bride (5) du côté de la colonne avec interposition des montants de support.

3. Tour de refroidissement selon la revendication 2, **caractérisée en ce qu'**un montant de support est configuré comme une douille d'écartement (44).

4. Tour de refroidissement selon la revendication 3, **caractérisée en ce qu'**une douille d'écartement (44) est traversée par une tige filetée (16).

5. Tour de refroidissement selon la revendication 4, **caractérisée en ce qu'**une tige filetée (16) s'appuie, du côté de la tête, contre la plaque de bride (5) et s'engrène, du côté du filetage, dans un logement de filetage (17) porté par la bride de liaison (15).

6. Tour de refroidissement selon l'une des revendications précédentes, **caractérisée en ce que** des cornières (32) sont prévues pour un support supplémentaire de la plaque de bride (5) sur la colonne (4).

7. Tour de refroidissement selon l'une des revendications précédentes, **caractérisée en ce que** le groupe moteur-transmission (6) comprend une plaque de fixation (30) du côté de la bride de liaison.

8. Tour de refroidissement selon l'une des revendications précédentes, **caractérisée en ce que** le groupe moteur-transmission (6) est vissé dans la bride de liaison (15).

9. Tour de refroidissement selon l'une des revendications précédentes, **caractérisée en ce que** la colonne (4) traverse le dispositif de refroidissement de fluide (27) dans la direction de hauteur (29).

10. Tour de refroidissement selon l'une des revendications précédentes, **caractérisée en ce que** la colonne (4) comprend un tuyau d'amenée (23) pour l'alimentation en fluide du dispositif de refroidissement de fluide (27).

11. Tour de refroidissement selon l'une des revendications précédentes, **caractérisée par** une tringlerie de support (7) pour la colonne (4).

12. Tour de refroidissement selon la revendication 11, **caractérisée en ce que** la tringlerie de support (7) est ancrée dans la fondation (3) de la tour de refroidissement (9) à distance de la colonne.

13. Tour de refroidissement selon la revendication 11, **caractérisée en ce que** la tringlerie de support (7) est ancrée dans la gaine de la tour de refroidissement (8) à distance de la colonne
